(19) Europäisches Patentamt / European Patent Office / Office européen des brevets

(11) **EP 4 764 906 A1**

(12) **DEMANDE DE BREVET EUROPEEN**

(43) Date de publication:
**24.06.2026 Bulletin 2026/26**

(21) Numéro de dépôt: **25214213.8**

(22) Date de dépôt: **07.11.2025**

(51) Classification Internationale des Brevets (IPC):
*G06F 21/10* (2013.01)   *G06F 8/65* (2018.01)
*G06F 21/57* (2013.01)   *H04L 9/08* (2006.01)
*H04L 9/32* (2006.01)   *H04L 9/40* (2022.01)
*H04W 12/041* (2021.01)   *H04W 12/0431* (2021.01)
*H04W 12/0433* (2021.01)

(52) Classification Coopérative des Brevets (CPC):
**H04L 63/0823; G06F 8/65; G06F 21/108;**
**G06F 21/57; H04L 9/0838; H04L 9/0877;**
**H04L 9/3263; H04L 63/062; H04W 12/041;**
**H04W 12/0431; H04W 12/0433**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **19.12.2024 FR 2414663**

(71) Demandeur: **IDEMIA France
92400 Courbevoie (FR)**

(72) Inventeurs:
• **DOTTAX, Emmanuelle
92400 COURBEVOIE (FR)**
• **EL KHOURY, Jenny
94200 COURBEVOIE (FR)**
• **CHAMLEY, Olivier
92400 COURBEVOIE (FR)**

(74) Mandataire: **Idemia
Service IP / IST
2, place Samuel de Champlain
92400 Courbevoie (FR)**

(54) **PROCÉDÉ DE GÉNÉRATION D'UNE PAIRE DE CLÉS ASYMÉTRIQUES DESTINÉES À ÊTRE UTILISÉES DANS UN PROTOCOLE CRYPTOGRAPHIQUE**

(57) Procédé de génération d'une paire de clés asymétriques comprenant une clé privée et une clé publique, à partir d'un secret partagé entre un dispositif cryptographique tel qu'une carte à puce et un système, le procédé comprenant les étapes suivantes mises en œuvre par le système : détermination (100) d'un diversifiant ; génération (104) de la clé de publique à partir du diversifiant et du secret ; génération (106) d'un certificat numérique comprenant la clé publique de sorte à attester d'un lien entre la clé publique et un dispositif cryptographique ; et envoi (108) du certificat numérique et du diversifiant au dispositif cryptographique, le dispositif cryptographique étant configuré pour générer la clé privée à partir du diversifiant et du secret et pour utiliser la clé privée dans un protocole cryptographique qui emploie le certificat.

Figure 3

## Description

### DOMAINE DE L'INVENTION

La présente invention concerne un procédé de génération d'une paire de clés asymétriques destinées à être utilisées dans un protocole cryptographique.

### ETAT DE LA TECHNIQUE

Avec la migration vers la cryptographie post-quantique, il est demandé aux fournisseurs de cartes à puce de mettre en œuvre une « crypto-agilité ». Il s'agit de la capacité à mettre à jour la cryptographie utilisée par un dispositif cryptographique sur le terrain, sans avoir à le rappeler ou à le remplacer.

Dans ce contexte, un paquet de mise à jour (« patch » en anglais) peut être envoyé à toutes les cartes d'une flotte pour implémenter la mise à jour. Pour la partie qui est commune à toutes les cartes (le code informatique), il est pratique de chiffrer et/ ou signer le paquet de mise à jour avec un jeu d'au moins une clé, l'au moins une clé du jeu étant connue de toutes les cartes de la flotte (sinon, il faudrait chiffrer et/ ou signer un paquet de mise à jour pour chaque carte, ce qui serait inefficace).

Mais, si le patch implique de changer de clés propres à la carte (par exemple lorsque des clés précédentes ont pu être exposées ou lorsque aucune clé précédente n'est compatible avec un algorithme cryptographique contenu dans le patch), cela peut être plus compliqué. En effet, lorsque les clés sont une paire de clés asymétriques, et que le protocole cryptographique dans lequel elles sont utilisées par la carte implique des certificats, un nouveau certificat doit être fourni.

Une solution pourrait consister à laisser la carte générer les nouvelles clés, puis faire une demande de certificat à une autorité de certification. Ce n'est pas pratique, car cela multiplie les échanges et nécessite un lien sécurisé et authentique carte par carte entre la carte et l'autorité de certification (le certificat doit être généré uniquement pour la bonne carte).

Une autre solution pourrait consister à générer les nouvelles clés à l'extérieur de la carte, à générer le certificat et à envoyer le tout à la carte. Là encore, un lien sécurisé et authentique carte par carte doit être établi entre la carte et l'autorité qui délivre ces données, ce qui n'est pas pratique.

### EXPOSE DE L'INVENTION

Un but de l'invention est de gérer cette situation de manière plus simple et plus flexible.

Il est à cet effet proposé deux procédés de génération d'une paire de clés asymétriques comprenant une clé privée et une clé publique, à partir d'un secret partagé entre un dispositif cryptographique tel qu'une carte à puce et un système, les deux procédés étant respectivement mis en œuvre par le système et par le dispositif cryptographique.

Le procédé mis en œuvre par le système, constituant un premier objet de la présente divulgation, comprend les étapes suivantes :

- détermination d'un diversifiant,
- génération de la clé de publique à partir du diversifiant et du secret
- génération d'un certificat numérique comprenant la clé publique de sorte à attester d'un lien entre la clé publique et un dispositif cryptographique,
- envoi du certificat numérique et du diversifiant au dispositif cryptographique, le dispositif cryptographique étant configuré pour : générer la clé privée à partir du diversifiant et du secret, et utiliser la clé privée dans un protocole cryptographique qui emploie le certificat.

Le procédé mis en œuvre par le dispositif cryptographique, constituant un deuxième objet de la présente divulgation, comprend les étapes suivantes :

- recevoir du système : un diversifiant, et un certificat numérique comprenant la clé publique, de sorte à attester d'un lien entre la clé publique et le dispositif cryptographique, la clé publique ayant été générée par le système à partir du diversifiant et du secret,
- générer la clé privée à partir du diversifiant et du secret,
- utiliser la clé privée dans un protocole cryptographique qui emploie le certificat.

Dans les procédés proposés constituant respectivement le premier objet et le deuxième objet, la paire de clés asymétrique ne fait pas l'objet d'une transmission entre le système et le dispositif cryptographique. En outre, le certificat n'est pas une donnée sensible. En conséquence, il n'est pas nécessaire d'établir un lien sécurisé et authentique entre le dispositif cryptographique et le système pour permettre au dispositif d'obtenir la paire de clés asymétriques avec un certificat pour la clé publique de ladite paire, puis de les utiliser. Un avantage de ces procédés est de pouvoir être appliqué à un dispositif cryptographique qui n'est pas programmé pour requérir des certificats auprès d'une autre entité.

Les procédés selon le premier objet et le deuxième objet peuvent comprendre les caractéristiques optionnelles suivantes prises seules ou en combinaison à chaque fois que cela fait sens techniquement.

De préférence, le dispositif cryptographique vérifie une correspondance entre la clé publique et la clé privée, la clé privée étant utilisée dans le protocole cryptographique à condition que la clé publique corresponde à la clé privée.

De préférence, la paire de clés asymétriques est à usage répété.

De préférence, le système envoie au dispositif cryptographique un paquet de mise à jour comprenant un programme à installer dans le dispositif cryptographique ou un correctif à appliquer à un programme installé dans le dispositif cryptographique, la génération de la clé privée et/ou l'utilisation de la clé privée dans le protocole cryptographique employant le certificat étant causée par une exécution d'instructions de code du programme par le dispositif cryptographique.

De préférence, le paquet de mise à jour comprend le diversifiant.

De préférence, le paquet de mise à jour a un format générique adapté pour mettre à jour le dispositif cryptographique et au moins un autre dispositif cryptographique.

Un troisième objet proposé par la présente divulgation est un produit programme d'ordinateur comprenant des instructions de code de programme pour l'exécution des étapes du procédé constituant le premier objet ou du procédé constituant le deuxième objet, lorsque ce programme est exécuté par un ordinateur.

Un quatrième objet proposé par la présente divulgation est un système pour la mise en œuvre du procédé constituant le premier objet. Ce système comprend :

- une mémoire stockant un secret partagé avec un dispositif cryptographique,
- un module de traitement configuré pour : déterminer un diversifiant, générer une clé publique à partir du diversifiant et du secret, et générer un certificat numérique comprenant la clé publique , de sorte à attester d'un lien entre la clé publique et le dispositif cryptographique,
- une interface de communication configurée pour envoyer le certificat numérique et le diversifiant au dispositif cryptographique, le dispositif cryptographique étant configuré pour : générer une clé privée à partir du diversifiant et du secret, la clé privée et la clé publique formant une paire de clés asymétriques, et utiliser la clé privée dans un protocole cryptographique qui emploie le certificat.

Un cinquième objet proposé par la présente divulgation est un dispositif cryptographique pour la mise en œuvre du procédé constituant le deuxième objet. Ce dispositif cryptographique comprend :

- une mémoire stockant un secret, le secret étant partagé avec un système configuré pour : déterminer un diversifiant, générer une clé publique à partir du diversifiant et du secret, et générer un certificat numérique comprenant la clé publique, de sorte à attester d'un lien entre la clé publique et le dispositif cryptographique ;
- une interface de communication propre à recevoir le diversifiant et le certificat numérique du système,
- un module de traitement configuré pour : générer la clé privée à partir du diversifiant et du secret, la clé privée et la clé publique formant une paire de clés asymétriques, et utiliser la clé privée dans un protocole cryptographique qui emploie le certificat.

Un sixième objet proposé par la présente divulgation est un ensemble comprenant un système et un dispositif cryptographique tel qu'une carte à puce partageant un secret, le système étant selon le quatrième objet et le dispositif cryptographique étant selon le cinquième objet.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 et la figure 2 illustrent de façon schématique un système et un dispositif cryptographique selon un mode de réalisation.

La figure 3 est un organigramme d'étapes d'un procédé selon un mode de réalisation, au cours duquel des clés sont générées.

Sur l'ensemble des figures, les éléments similaires portent des références identiques.

## DESCRIPTION DETAILLEE DE L'INVENTION

### 1) Système et dispositif cryptographique

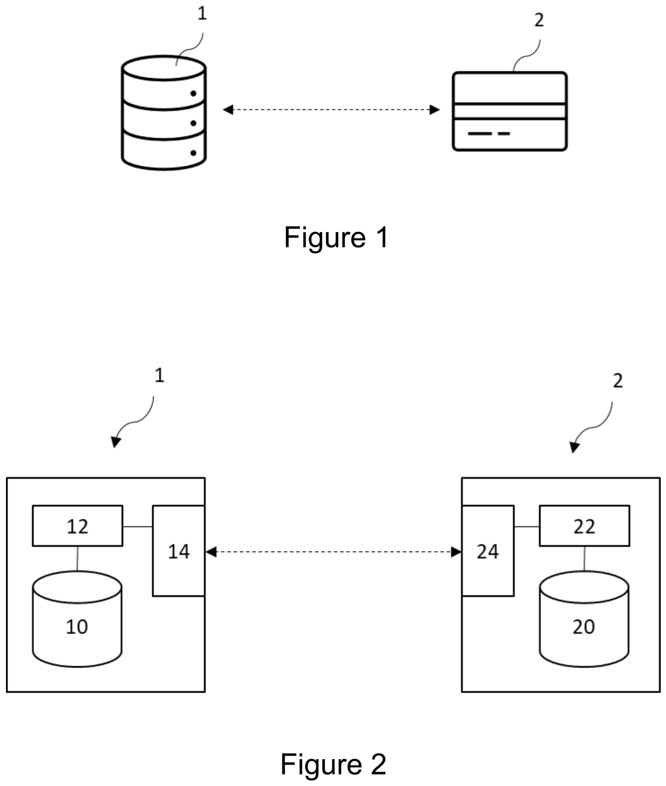

On a représenté sur la figure 1 un système 1 et un dispositif cryptographique 2.

Le système 1 a pour fonction générale de fournir au dispositif cryptographique 2 des données de configuration permettant au dispositif cryptographique 2 de fonctionner, en particulier mettre en œuvre un protocole cryptographique impliquant une paire de clés asymétriques et un certificat.

Le système 1 peut fournir de telles données pas seulement au dispositif cryptographique 2, mais à une flotte de dispositifs cryptographiques dont le dispositif cryptographique 2 fait partie.

Le système 1 comprend une mémoire 10, un module de traitement 12 et une interface de communication 14.

La mémoire 10 stocke une base de données associant des secrets et des identifiants de dispositif cryptographique 2 respectifs. Comme décrit plus loin, la mémoire 10 peut mémoriser des secrets et des identifiants de dispositif cryptographique 2 respectifs, ou des données de diversification et des identifiants de dispositif cryptographique 2 respectifs avec un secret principal. Tout identifiant a vocation à identifier un seul dispositif cryptographique 2 ; autrement dit, deux dispositifs cryptographiques différents ont forcément des identifiants différents. Par ailleurs, chaque secret est partagé entre le système 1 et un seul dispositif cryptographique 2.

Le module de traitement 12 a pour fonction de réaliser des traitements qui seront décrits plus loin. Le module de traitement 12 comprend par exemple au moins un processeur propre à exécuter des instructions de code d'un programme, causant ainsi ces traitements. Les instructions de code du programme sont par exemple stockées dans la mémoire.

L'interface de communication 14 est propre à communiquer avec le dispositif cryptographique 2 (et éventuellement les autres dispositifs cryptographiques de la flotte précitée) par l'intermédiaire d'un réseau.

Le système 1 peut comprendre un serveur regroupant les composants précités, ou bien comprendre plusieurs serveurs entre lesquels ces composants sont répartis.

Le dispositif cryptographique 2 a fonction générale de mettre en œuvre un protocole cryptographique quelconque. Par exemple, ce protocole cryptographique comprend une signature numérique, un chiffrement ou un déchiffrement ; il peut s'agit par exemple d'une authentification mutuelle entre le dispositif cryptographique 2 et un autre équipement.

Le dispositif cryptographique 2 comprend une mémoire 20, un module de traitement 22 et une interface de communication 24.

La mémoire 20 stocke un secret. Il s'agit de l'un des secrets référencés dans la base de données du système 1.

Le module de traitement 22 a pour fonction de réaliser des traitements qui seront décrits plus loin. Le module de traitement 22 comprend par exemple au moins un processeur propre à exécuter des instructions de code d'un programme, causant ainsi ces traitements. Les instructions de code du programme sont par exemple stockées dans la mémoire 20.

L'interface de communication 24 est propre à communiquer avec le système 1 par l'intermédiaire d'un réseau. L'interface de communication 24 peut comprendre un port propre à être électriquement relié à un équipement faisant office de relai entre le dispositif cryptographique 2 et le système 1. En variante ou en complément, l'interface de communication comprend une antenne pour émettre ou capter des signaux radio, selon un protocole sans fil quelconque (NFC, Wi-Fi, Bluetooth, cellulaire, etc.). Dans une autre variante, l'équipement relai est un terminal qui communique en NFC avec le dispositif signataire ; le terminal mobile peut être un smartphone ou bien un terminal bancaire.

Le dispositif cryptographique 2 est par exemple une carte à puce. Dans ce cas, l'équipement relai peut comprendre une fente pour recevoir la carte à puce ; une fois reçue dans la fente, le port de la carte est électriquement relié à un port de l'équipement relai.

2) Procédé

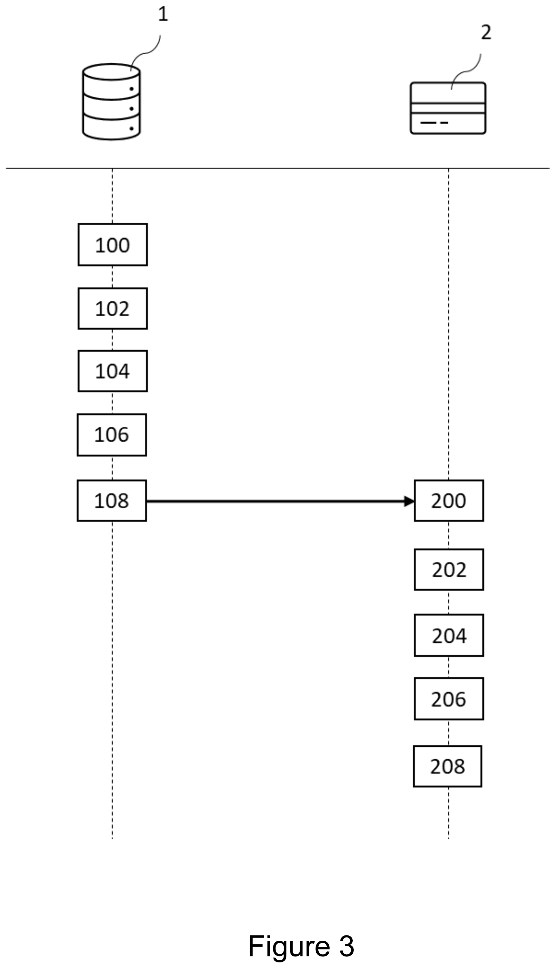

On va maintenant décrire un procédé mis en œuvre par le système 1 et par le dispositif cryptographique 2 en référence à la figure 3. Par convention, les étapes réalisées par le système 1 ont des références numériques de la forme 1XX, et les étapes réalisées par le dispositif cryptographique 2 ont des références numériques de la forme 2XX. Sauf mention explicite contraire, les étapes sont mises en œuvre ou causées par les modules de traitements respectifs du système 1 et du dispositif cryptographique 2.

On suppose qu'un secret a été préalablement partagé entre le système 1 et le dispositif cryptographique 2, à l'aide d'un procédé connu de l'état de la technique. Le secret peut avoir été généré aléatoirement, ou bien dériver d'un secret principal (avec une donnée de diversification, par exemple avec une valeur publique unique du dispositif cryptographique 2, comme un identifiant ou un numéro de série). Quand le secret est généré aléatoirement, le secret est référencé dans la base de données de la mémoire 10 (en association avec un identifiant propre au dispositif cryptographique 2), et stocké par ailleurs dans la mémoire 20. Quand le secret dérive d'un secret principal, le secret ou, la donnée de diversification et le secret principal, est stocké dans la base de données de la mémoire 10 (en association avec un identifiant propre au dispositif cryptographique 2), et le secret est par ailleurs stocké dans la mémoire 20. La donnée de diversification peut être l'identifiant propre au dispositif cryptographique 2.

Dans une étape 100, le système 1 détermine un diversifiant. Le diversifiant est une donnée dont la valeur varie à chaque nouvelle mise en œuvre de cette étape 100. Le diversifiant est par exemple un aléa, généré de manière aléatoire ou pseudo-aléatoire par le système 1. En variante, le diversifiant est la valeur d'un compteur, incrémenté ou décrémenté par le système 1 entre deux mises en œuvre successives de cette étape 100.

Dans une étape 102, le système 1 génère un paquet de mise à jour, propre à mettre à jour le dispositif cryptographique 2.

Le paquet de mise à jour contient un programme informatique installable dans le dispositif cryptographique 2. Le programme informatique comprend des instructions de code exécutable par le module de traitement 22 du dispositif cryptographique 2, pour une génération d'une paire de clés asymétriques et/ou la mise en œuvre d'un protocole cryptographique. Le protocole cryptographique peut être un nouveau service, qui n'est à ce stade pas rendu par le dispositif cryptographique 2.

En variante ou en complément, le paquet de mise à jour comprend un correctif de programme destiné à être appliqué à un programme informatique déjà installé dans le dispositif cryptographique 2 pour la mise en œuvre d'un protocole cryptographique. Un tel correctif peut avoir vocation à corriger des bogues dans ce programme informatique et/ou lui ajouter des fonctionnalités.

Le paquet de mise à jour contient par ailleurs le diversifiant.

De préférence, le paquet de mise à jour a un format générique lui permettant de mettre à jour non seulement le dispositif cryptographique 2, mais également au moins un autre dispositif cryptographique, voire tout dispositif cryptographique de la flotte précitée. Grâce à cela, il n'est pas nécessaire de générer un paquet de mise jour pour chaque dispositif cryptographique, ce qui serait coûteux en ressources pour mettre à jour toute la flotte. Dans ce cas, il est entendu que le diversifiant est un diversifiant commun pour les dispositifs cryptographiques ciblés par la mise à jour ; autrement dit, le diversifiant n'est alors pas une donnée spécifique au dispositif cryptographique 2.

Dans une étape 104, le système 1 génère une clé de référence. Comme on le verra dans la suite, la clé de référence est censée correspondre à une clé publique utilisée ultérieurement par le dispositif cryptographique 2. La clé de référence est générée par le système 1 à partir du diversifiant et du secret propre au dispositif cryptographique 2 tel que stocké dans la mémoire 10, et ce à l'aide d'une première fonction cryptographique, notée f.

En variante, la première fonction cryptographique est une fonction qui génère une paire de clés asymétriques (pk, sk). On peut donc écrire :

$$< sk, pk >= f(div, cardsecret)$$

où *cardsecret* désigne le secret, et où *div* désigne le diversifiant. Dans ce cas, la clé privée *sk* n'est pas utilisée par le système 1.

La première fonction cryptographique est déterministe, dans le sens où elle fournit toujours le même résultat en sortie quand on lui fournit à plusieurs reprise les mêmes valeurs en entrée.

Si l'on met de côté le système 1, on notera que la clé de référence est une donnée propre au dispositif cryptographique 2, dans la mesure où le secret l'est aussi. En revanche, on a vu précédemment que le diversifiant peut être une donnée commune à plusieurs dispositifs cryptographiques.

Dans une étape 106, le système 1 génère un certificat numérique comprenant la clé de référence et un identifiant propre au dispositif cryptographique 2, de sorte à attester d'un lien entre la clé de référence et l'identifiant. Cette étape, connue de l'état de la technique, inclut une opération de signature numérique par le système 1. Il est à noter que l'identifiant inclus dans le certificat numérique peut avoir été utilisé en amont par le système 1 pour générer le secret *cardsecret* propre au dispositif cryptographique 2 ou être l'identifiant associé à ce secret dans la base de données discutée précédemment, associant identifiants et secrets.

Dans une étape 108, le système 1 envoie au dispositif cryptographique 2 le paquet de mise à jour et le certificat numérique. Ces données peuvent être envoyées en même temps, ou séparément, l'une après l'autre. Le paquet de mise à jour et le certificat numérique peuvent transiter par des équipements et/ou réseaux différents faisant office d'intermédiaire entre le système 1 et le dispositif cryptographique 2.

Le système 1 peut répéter les étapes 104, 106 et 108 pour différents dispositifs cryptographiques. Ainsi, sont envoyés à ces dispositifs cryptographiques des certificats numériques différents (générés sur la base de secrets différents, mais possiblement sur la base du même diversifiant). En revanche, le même paquet de mise à jour est envoyé à ces dispositifs cryptographiques si ce paquet a un format générique selon les modalités décrites précédemment. Ainsi, il n'est pas nécessaire de répéter les étapes 100 et 102 dans ce cas ; le paquet générique est alors généré une fois pour toutes, avant d'être envoyé aux différents dispositifs cryptographiques.

Dans une étape 200, le dispositif cryptographique 2 reçoit le paquet de mise à jour et le certificat numérique.

Dans une étape 202, le dispositif cryptographique 2 se met à jour à l'aide du paquet de mise à jour. Si le paquet de mise à jour comprend un programme informatique pour la mise en œuvre d'un protocole cryptographique et/ou pour la génération de clés, ce programme est installé dans la mémoire 20. Si le paquet de mise à jour comprend un correctif pour un programme informatique déjà présent dans la mémoire et destiné à la mise en œuvre d'un protocole cryptographique, le correctif est appliqué à ce programme informatique dans la mémoire 20.

Dans une étape 204, le dispositif cryptographique 2 génère une paire de clés asymétriques comprenant une clé privée et une clé publique. Au cours de cette étape 204, la clé publique est générée à partir du diversifiant fourni par le système 1 et à partir du secret *cardsecret* qui est stocké dans la mémoire du dispositif cryptographique 2, à l'aide d'une deuxième fonction cryptographique.

La deuxième fonction cryptographique est déterministe, dans le seul où elle fournit toujours le même résultat en sortie quand on lui fournit à plusieurs reprise les mêmes valeurs en entrée.

En dépit de son caractère déterministe, la deuxième fonction cryptographique peut utiliser un générateur pseudo-aléatoire pour générer des pseudo-aléas sur la base du secret *cardsecret* tel que mémorisé dans la mémoire 20. Ces pseudos-aléas sont des données intermédiaires qui sont ensuite utilisées par la deuxième fonction cryptographique pour générer la paire de clés asymétriques. Ce générateur pseudo-aléatoire peut également avoir été utilisé par la première fonction cryptographique, côté système 1. Le générateur pseudo-aléatoire peut faire partie du code fourni dans le paquet de mise à jour, mais il est préférable qu'il ne le soit pas.

On notera que la deuxième fonction cryptographique peut, en totalité ou en partie, avoir été fournie par le système 1 dans le paquet de mise à jour. C'est en particulier le cas du générateur pseudo-aléatoire. Dans ce cas, la deuxième fonction cryptographique, ou a tout le moins le générateur pseudo-aléatoire, a été installé à l'étape 202.

En notant g la deuxième fonction cryptographique, on peut écrire :

$$< sk, pk > = g(div, cardsecret)$$

Lorsque la première fonction cryptographique génère non pas une seule clé mais une paire de clés, alors la deuxième fonction cryptographique utilisée par le dispositif cryptographique 2 est fonctionnellement équivalente à la première fonction cryptographique utilisée par le système 1. Deux fonctions mathématiques fonctionnellement équivalentes produisent les mêmes valeurs de sortie lorsqu'on leur fournit les mêmes valeurs d'entrée. Dans ces conditions, si le diversifiant tel que reçu par le dispositif cryptographique 2 n'a pas été altéré depuis son envoi par le système 1 dans le paquet de mise à jour, alors la clé publique générée par la deuxième fonction cryptographique est égale à la clé de référence. Mais en cas d'une telle altération, la clé publique et la clé de référence sont différentes.

La paire de clés asymétriques est à usage répété. Ainsi, il ne s'agit pas d'une paire de clés de session.

Dans une étape 206 optionnelle, le dispositif cryptographique 2 vérifie une correspondance entre la clé privée et la clé de référence. Autrement dit, le dispositif cryptographique 2 vérifie lors de cette étape 206 si ces deux clés forment véritablement une paire de clés asymétrique.

Au cours de l'étape 206, le dispositif cryptographique 2 peut vérifier une telle correspondance:

- en comparant la clé publique générée à l'étape 204 avec la clé de référence contenue dans le certificat numérique reçu ; il est considéré alors que la clé privée et la clé de référence correspondent lorsque la clé publique et la clé de référence sont identiques ; ou
- en signant numériquement une donnée avec la clé privée générée à l'étape 204, puis en vérifiant la signature avec la clé de référence reçue ; ou
- en chiffrant une donnée avec la clé de référence reçue, puis en déchiffrant le chiffré ainsi obtenu avec la clé privée générée à l'étape 204 puis en comparant le résultat du déchiffrement avec la donnée qui avait été chiffrée.

Si la clé privée et la clé de référence correspondent, le dispositif cryptographique 2 autorise une mise en œuvre ultérieure d'une étape 208.

Si la clé privée et la clé de référence ne correspondent pas, le dispositif cryptographique 2 n'autorise pas la mise en œuvre de l'étape 208.

On notera que l'étape 208 n'est pas forcément déclenchée immédiatement à l'issue du test 206.

Dans l'étape 208, le dispositif cryptographique 2 exécute le programme informatique installé ou corrigé. Cette exécution cause la mise en œuvre du protocole cryptographique précité. En particulier, le dispositif utilise la clé privée dans ce protocole cryptographique qui emploie le certificat. Le protocole cryptographique est connu de l'état de la technique. Il peut comprendre par exemple :

- un déchiffrement de données fournies par un autre équipement à l'aide de la clé privée,
- une signature numérique d'une donnée à l'aide de la clé privée, et/ou
- la fourniture du certificat numérique à un autre équipement.

La clé publique générée peut également être utilisée par le dispositif cryptographique 2 dans le protocole cryptographique, mais cela reste optionnel.

Le protocole cryptographique comprend par exemple une authentification du dispositif cryptographique 2 auprès d'un autre équipement, à l'aide de la paire de clés et du certificat.

L'étape 208 peut être répétée dans le temps. A chaque nouvelle mise en œuvre de cette étape 208, le dispositif cryptographique 2 réutilise la paire de clés asymétriques générée à l'étape 204.

Les étapes « 2XX » mises en œuvre par le dispositif cryptographique 2, sont également mises œuvre par d'autres dispositifs cryptographiques à qui le paquet de mise à jour et un certificat ont été envoyés par le système 1, le cas échéant.

Autres modes de réalisation et variantes

Il a été envisagé ci-dessus que le diversifiant fasse partie du paquet de mise à jour ; toutefois, dans d'autres modes de réalisations, le diversifiant est envoyé par le serveur séparément du paquet de mise à jour, par exemple en même temps que le certificat (ou pas).

Bien que le mode de réalisation décrit ci-dessus prévoie la génération d'une paire de clés asymétrique dans le contexte d'une mise à jour, ce contexte ne doit pas être considéré comme limitatif. En effet, le système 1 peut envoyer le diversifiant et le certificat au dispositif cryptographique 2 pour réaliser un simple renouvellement de de clés avec le dispositif cryptographique 2. Un tel renouvellement peut être déclenché lorsqu'il est considéré que la clé privée a été exposée, ou au terme d'une certaine période (on ne souhaite pas que les mêmes clés soient utilisées trop longtemps sur le terrain).

Dans le mode de réalisation décrit ci-dessus, le dispositif cryptographique 2 génère la paire de clés asymétriques à l'étape 204. Dans d'autres modes de réalisation, le dispositif cryptographique peut se borner à générer la clé privée, et ne pas générer la clé publique.. Le dispositif cryptographique 2 peut alors utiliser la clé de référence fournie dans le certificat numérique comme clé publique. L'étape 206 n'est alors pas obligatoirement mise en œuvre, en particulier lorsque le mode de réalisation de l'étape 206 décrit plus haut consistant à comparer la clé publique générée à l'étape 204 avec la clé de référence contenue dans le certificat numérique reçue.

**Revendications**

1. Procédé de génération d'une paire de clés asymétriques comprenant une clé privée et une clé publique, à partir d'un secret partagé entre un dispositif cryptographique tel qu'une carte à puce et un système, le procédé comprenant les étapes suivantes mises en œuvre par le système :

   • détermination (100) d'un diversifiant ;
   • génération (104) de la clé de publique à partir du diversifiant et du secret ;
   • génération (106) d'un certificat numérique comprenant la clé publique de sorte à attester d'un lien entre la clé publique et un dispositif cryptographique ; et
   • envoi (108) du certificat numérique et du diversifiant au dispositif cryptographique, le dispositif cryptographique étant configuré pour :

      • générer la clé privée à partir du diversifiant et du secret,
      • utiliser la clé privée dans un protocole cryptographique qui emploie le certificat.

2. Procédé de génération d'une paire de clés asymétriques comprenant une clé privée et une clé publique, à partir d'un secret partagé entre un dispositif cryptographique tel qu'une carte à puce et un système, le procédé comprenant les étapes suivantes mises en œuvre par le dispositif cryptographique :

   • recevoir (200) du système :

      • un diversifiant, et
      • un certificat numérique comprenant la clé publique, de sorte à attester d'un lien entre la clé publique et le dispositif cryptographique, la clé publique ayant été générée par le système à partir du diversifiant et du secret ;

   • générer (204) la clé privée à partir du diversifiant et du secret ; et
   • utiliser (208) la clé privée dans un protocole cryptographique qui emploie le certificat.

3. Procédé selon l'une quelconque des revendications précédentes, dans lequel le dispositif cryptographique vérifie (206) une correspondance entre la clé publique et la clé privée, la clé privée étant utilisée dans le protocole cryptographique à condition que la clé publique corresponde à la clé privée.

4. Procédé selon l'une quelconque des revendications précédentes, dans lequel la paire de clés asymétriques est à usage répété.

5. Procédé selon l'une quelconque des revendications précédentes, dans lequel

   • le système (108) envoie au dispositif cryptographique un paquet de mise à jour comprenant un programme à installer dans le dispositif cryptographique ou un correctif à appliquer à un programme installé dans le dispositif cryptographique,
   • la génération de la clé privée (204) et/ou l'utilisation (208) de la clé privée dans le protocole cryptographique employant le certificat est causée par une exécution d'instructions de code du programme par le dispositif cryptographique.

6. Procédé selon la revendication précédente, dans lequel le paquet de mise à jour comprend le diversifiant.

7. Procédé selon l'une quelconque des revendications 5 et 6, dans lequel le paquet de mise à jour a un format générique adapté pour mettre à jour le dispositif cryptographique et au moins un autre dispositif cryptographique.

8. Produit programme d'ordinateur comprenant des instructions de code de programme pour l'exécution des étapes du procédé selon l'une des revendications précédentes, lorsque ce programme est exécuté par un ordinateur.

9. Système (1) comprenant

   • une mémoire (10) stockant un secret partagé avec un dispositif cryptographique ;
   • un module de traitement (12) configuré pour :

      • déterminer un diversifiant,
      • générer une clé publique (pk) à partir du diversifiant et du secret,
      • générer un certificat numérique comprenant la clé publique , de sorte à attester d'un lien entre la clé publique et le dispositif cryptographique ; et

   • une interface de communication (14) configurée pour envoyer le certificat numérique et le diversifiant au dispositif cryptographique, le dispositif cryptographique étant configuré pour :

- générer une clé privée à partir du diversifiant et du secret, la clé privée et la clé publique formant une paire de clés asymétriques, et
- utiliser la clé privée dans un protocole cryptographique qui emploie le certificat.

10. Dispositif cryptographique (2) comprenant :

- une mémoire (20) stockant un secret, le secret étant partagé avec un système (1) configuré pour :

  - déterminer un diversifiant,
  - générer une clé publique (pk) à partir du diversifiant et du secret,
  - générer un certificat numérique comprenant la clé publique, de sorte à attester d'un lien entre la clé publique et le dispositif cryptographique (2) ;

- une interface de communication (24) propre à recevoir le diversifiant et le certificat numérique du système (1) ; et
- un module de traitement (22) configuré pour :

  - générer la clé privée à partir du diversifiant et du secret, la clé privée et la clé publique formant une paire de clés asymétriques,
  - utiliser la clé privée dans un protocole cryptographique qui emploie le certificat.

11. Ensemble comprenant un système (1) et un dispositif cryptographique (2) tel qu'une carte à puce partageant un secret, le système (1) étant conforme à la revendication 9 et le dispositif cryptographique (2) étant conforme à la revendication 10.

# Figure 1

# Figure 2

Figure 3

Europäisches
Patentamt
European
Patent Office
Office européen
des brevets

**RAPPORT DE RECHERCHE EUROPEENNE**

Numéro de la demande

EP 25 21 4213

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2018/375667 A1 (SOVIO SAMPO [FI] ET AL) 27 décembre 2018 (2018-12-27) * figure 3 * * figure 4 * * alinéa [0053] - alinéa [0054] * * alinéa [0057] * * alinéa [0061] - alinéa [0062] * * alinéa [0065] * * alinéa [0069] * ----- | 1-11 | INV. G06F21/10 G06F8/65 G06F21/57 H04L9/08 H04L9/32 H04L9/40 H04W12/041 H04W12/0431 H04W12/0433 |
| A | US 2020/322134 A1 (DUVAL OLIVIER [US]) 8 octobre 2020 (2020-10-08) * figure 1 * * figure 6 * * alinéa [0015] * * alinéa [0024] * * alinéa [0029] * ----- | 1-11 | |
| A | US 2019/238342 A1 (LIAN GANG [FI] ET AL) 1 août 2019 (2019-08-01) * figures 1-2 * * figures 4-6 * * alinéa [0004] * * alinéa [0012] * * alinéa [0075] * * alinéa [0079] * * alinéa [0081] * * alinéa [0084] * * alinéa [0087] * ----- | 1-11 | DOMAINES TECHNIQUES RECHERCHES (IPC)  G06F H04L H04W |

Le présent rapport a été établi pour toutes les revendications

| Lieu de la recherche | Date d'achèvement de la recherche | Examinateur |
|---|---|---|
| Munich | 25 mars 2026 | Caragata, Daniel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**          EP 25 21 4213

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-03-2026

| Document brevet cité au rapport de recherche | Date de publication | Membre(s) de la famille de brevet(s) | Date de publication |
|---|---|---|---|
| US 2018375667 A1 | 27-12-2018 | CN 109478214 A | 15-03-2019 |
| | | EP 3387576 A1 | 17-10-2018 |
| | | US 2018375667 A1 | 27-12-2018 |
| | | WO 2018010791 A1 | 18-01-2018 |
| US 2020322134 A1 | 08-10-2020 | CN 113661681 A | 16-11-2021 |
| | | EP 3949261 A1 | 09-02-2022 |
| | | JP 7351925 B2 | 27-09-2023 |
| | | JP 2022527985 A | 07-06-2022 |
| | | KR 20210135627 A | 15-11-2021 |
| | | SG 11202109815Y A | 28-10-2021 |
| | | US 2020322134 A1 | 08-10-2020 |
| | | US 2021377004 A1 | 02-12-2021 |
| | | US 2025167984 A1 | 22-05-2025 |
| | | WO 2020205173 A1 | 08-10-2020 |
| US 2019238342 A1 | 01-08-2019 | CN 110050437 A | 23-07-2019 |
| | | EP 3497878 A1 | 19-06-2019 |
| | | US 2019238342 A1 | 01-08-2019 |
| | | WO 2018046073 A1 | 15-03-2018 |

EPO FORM P0460

Pour tout renseignement concernant cette annexe : voir Journal Officiel de l'Office européen des brevets, No.12/82